# EUROPEAN PATENT APPLICATION

(11) **EP 3 021 539 A1**
(43) Date of publication of application: **18.05.2016**
(21) Application number: 15188007.7
(22) Date of filing: 01.10.2015
(51) Int. Cl.: H04L 12/819, H04L 12/803

(54) **DATA TRANSMISSION METHOD, APPARATUS, AND SYSTEM**

(30) Priority: 14.11.2014 CN 201410648483
(71) Applicant: Huawei Technologies Co., Ltd., Longgang District Shenzhen, Guangdong 518129 (CN)
(72) Inventor: FANG, Yonglong, 518129 Shenzhen (CN)
(74) Representative: Pfenning, Meinig & Partner mbB

(57) **Abstract**

Embodiments of the present invention disclose a data transmission method includes: receiving, by an access gateway, data packets; transmitting, by the access gateway, the data packets to an operator network by using a digital subscriber line DSL channel; detecting, by the access gateway, a status of a bandwidth occupied when the data packets are transmitted on the DSL channel; determining, by the access gateway, that the DSL channel cannot satisfy a user requirement and some data packets need to be overflowed; and overflowing, by the access gateway to an LTE channel, the data packets needing to be overflowed, and transmitting the data packets to the operator network by using the DSL channel in combination with the LTE channel.

## Description

### TECHNICAL FIELD

The present invention relates to the field of communications technologies, and in particular, to a data transmission method, apparatus, and system.

### BACKGROUND

Because of simple cabling, a DSL (Digital Subscriber Line, digital subscriber line) has a low price. The DSL is a common manner for a network connection, especially an ADSL is a main network connection means of a family or an enterprise. The ADSL has large downlink bandwidths, and is applicable to a daily life such as web surfing and online document obtaining. With development of a digital technology and a media technology such as video conferencing and highly simulated interaction, a user has an increasingly higher requirement for an access bandwidth. However, a limitation of a DSL technology itself determines that the DSL can provide a very limited maximum bandwidth, for example, the ADSL theoretically has an uplink bandwidth of only 2 Mbps, and it is very difficult to satisfy a media application requirement.

To increase an access bandwidth of a user, a popular manner is to use a new access method such as Ethernet access and fiber access. Although these manners can provide large bandwidths, a new network needs to be deployed, and costs are generally high. Particularly, for a remote area, because costs of deploying and maintaining a network are huge, and users are scattered and are small in quantity, an MSP (Multi-Service Provider, multi-service provider) is often reluctant to invest in this part of the market.

As the fourth-generation high bandwidth wireless communications technology, LTE (Long Term Evolution, Long Term Evolution) theoretically can provide an uplink rate of 75 M and a downlink rate of 300 M, and is an ideal high bandwidth access manner. To use an LTE access manner, a corresponding base station needs to be set up; and deployment for end users is simple, but access costs thereof are high.

### SUMMARY

Embodiments of the present invention provide a data transmission method, apparatus, and system that have low networking costs, and can provide a high transmission bandwidth.

According to a first aspect, a data transmission method is provided, where the method includes:
receiving, by an access gateway, data packets;
transmitting, by the access gateway, the data packets to an operator network by using a digital subscriber line DSL channel;
detecting, by the access gateway, a condition of a bandwidth occupied when the data packets are transmitted on the DSL channel;
determining, by the access gateway, that the DSL channel cannot satisfy a user requirement and some data packets need to be overflowed; and
overflowing, by the access gateway to an LTE channel, the data packets needing to be overflowed, and transmitting the data packets to the operator network by using the DSL channel in combination with the LTE channel.

With reference to the first aspect, in a first possible implementation manner, a determining manner in the step of the determining, by the access gateway, that the DSL channel cannot satisfy a user requirement and some data packets need to be overflowed is specifically: measuring the data packets by using a measurement bucket of the DSL channel, and if the data packets do not exceed a capacity of the measurement bucket of the DSL channel, transmitting the data packets by using the DSL channel without the need of overflow; or if some data packets exceed a capacity of the measurement bucket of the DSL channel, needing to overflow the excess data packets.

With reference to the first aspect, in a second possible implementation manner, a specific manner of the overflowing, by the access gateway to an LTE channel, the data packets needing to be overflowed are: allocating, by an allocation module of the access gateway to an LTE transceiver module of the access gateway, some data packets needing to be overflowed, transmitting, by the LTE transceiver module, the overflowed data packets to the operator network by using the LTE channel, and transmitting, by a DSL transceiver module of the access gateway to the operator network by using the DSL channel, data packets that are not overflowed.

In a third possible implementation manner of the first aspect, before the step of the overflowing, by the access gateway to an LTE channel, the data packets needing to be overflowed, the method further includes:
further determining, by the access gateway, availability of the LTE channel, and if the LTE channel is available, performing a next step.

In a fourth possible implementation manner of the first aspect, after the step of the transmitting the data packets to the operator network by using the DSL channel in combination with the LTE channel, the method further includes: regularly detecting, by the access gateway, the status of the bandwidth occupied when the data packets are transmitted on the DSL channel, and if it is determined that the DSL channel can satisfy the user requirement independently, performing, by the access gateway, no data packets overflow processing.

According to a second aspect, an access gateway is provided, including:
a receiving module, configured to receive data packets;
a detection module, configured to detect a status of a bandwidth occupied when the data packets are transmitted on a DSL channel and further determine whether the DSL channel satisfies a user requirement;
an allocation module, configured to perform overflow allocation on data packets; and
a DSL transceiver module and an LTE transceiver module, where when the detection module determines that the existing DSL channel cannot satisfy the user requirement and some data packets need to be overflowed, the allocation module allocates, to the LTE transceiver module, some data packets needing to be overflowed, and the LTE transceiver module transmits the overflowed data packets to an operator network by using an LTE channel.

With reference to the second aspect, in a first possible implementation manner, a method of determining whether the DSL channel satisfies a user requirement is specifically:
measuring the data packets by using a measurement bucket of the DSL channel, and if the data packets do not exceed a capacity of the measurement bucket of the DSL channel, transmitting the data packets by using the DSL channel without the need of overflow; or if the data packets exceed a capacity of the measurement bucket of the DSL channel, needing to overflow the excess data packets.

According to a third aspect, a data transmission system is provided, including:
an operator network;
one or more client devices, connected to the operator network by using an access gateway; and
the access gateway, specifically including: a receiving module, configured to receive data packets; a detection module, configured to detect a status of a bandwidth occupied when the data packets are transmitted on a DSL channel and further determine whether the DSL channel satisfies a user requirement; an allocation module, configured to perform overflow allocation on data packets; and a DSL transceiver module and an LTE transceiver module, where when the detection module determines that the existing DSL channel cannot satisfy the user requirement and some data packets need to be overflowed, the allocation module allocates, to the LTE transceiver module, some data packets needing to be overflowed, and the LTE transceiver module transmits the overflowed data packets to the operator network by using an LTE channel.

According to the embodiments of the present invention, two different transmission channels: a DSL transmission channel and an LTE channel are bound, and if it is detected that a bandwidth for data transmission in a DSL manner cannot satisfy a user requirement, an LTE transmission module is automatically started, so as to increase a transmission bandwidth and improve data transmission efficiency. This also effectively avoids a great increase in LTE use costs and improves user experience.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic architectural diagram of a system according to an embodiment of the present invention;
FIG. 2 is a schematic structural diagram of an access gateway according to an embodiment of the present invention;
FIG. 3 is a schematic diagram of a data transmission method according to an embodiment of the present invention;
FIG. 4 is a flowchart of a method according to an embodiment of the present invention;
FIG. 5 is a flowchart of a manner in which scheduling processing is performed on data packets according to an embodiment of the present invention; and
FIG. 6 is a schematic diagram of performing scheduling processing on data packets according to an embodiment of the present invention.

### DESCRIPTION OF EMBODIMENTS

The following clearly and completely describes the technical solutions in the embodiments of the present invention with reference to the accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

### Embodiment 1

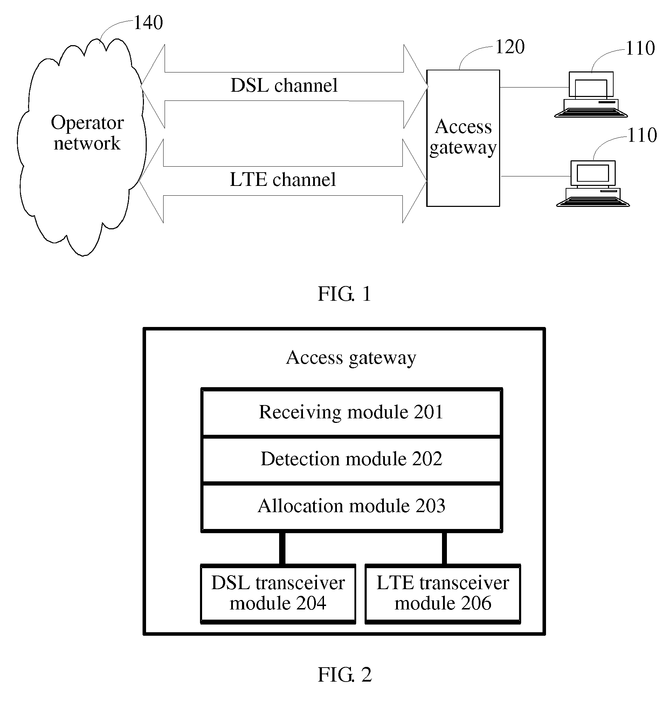

As shown in FIG. 1, a data transmission system provided by this embodiment of the present invention includes a client device 110, an access gateway 120, and an operator network 140. There may be one or more client devices 110, which are separately connected to the access gateway 120. The access gateway 120 is further connected to the operator network 140 by using a DSL (Digital Subscriber Line, digital subscriber line) channel and an LTE (Long Term Evolution, fourth-generation communications technology) channel, so that the client device 110 may acquire data from the operator network 140 by using the access gateway 120, or may upload local data to the operator network 140 by using the access gateway 120, thereby implementing data sending and receiving between the client device 110 and the operator network 140.

There are two paths: the DSL channel and the LTE channel for the access gateway in this embodiment of the present invention to be connected to the operator network. In a case in which network traffic is small, the cheap DSL channel is preferably used, and if the network traffic increases and the cheap DSL channel cannot satisfy a user requirement, the packets on the DSL channel is overflowed to another link with a higher bandwidth, for example, the LTE channel. In this manner, not only a high access bandwidth can be provided, but also access costs can be reduced, so that a current resource is effectively applied and network deployment costs are reduced.

To implement overflow allocation on data packets, as shown in FIG. 2, the access gateway 120 in this embodiment of the present invention further includes: a receiving module 201, a detection module 202, an allocation module 203, a DSL transceiver module 204, and an LTE transceiver module 206. The receiving module 201 is configured to receive data sent by the client device 110; the detection module 202 is configured to detect a bandwidth occupied when the data is transmitted on the DSL channel, and determine whether some data packets need to be overflowed; and the allocation module 203 is configured to perform overflow allocation on the data packet. When the detection module 202 determines that the existing DSL channel cannot satisfy the user requirement and some data packets need to be overflowed, the allocation module 203 allocates, to the LTE transceiver module 206, some data packets needing to be overflowed, and the LTE transceiver module 206 transmits the overflowed data packets to the operator network 140 by using the LTE channel.

### Embodiment 2

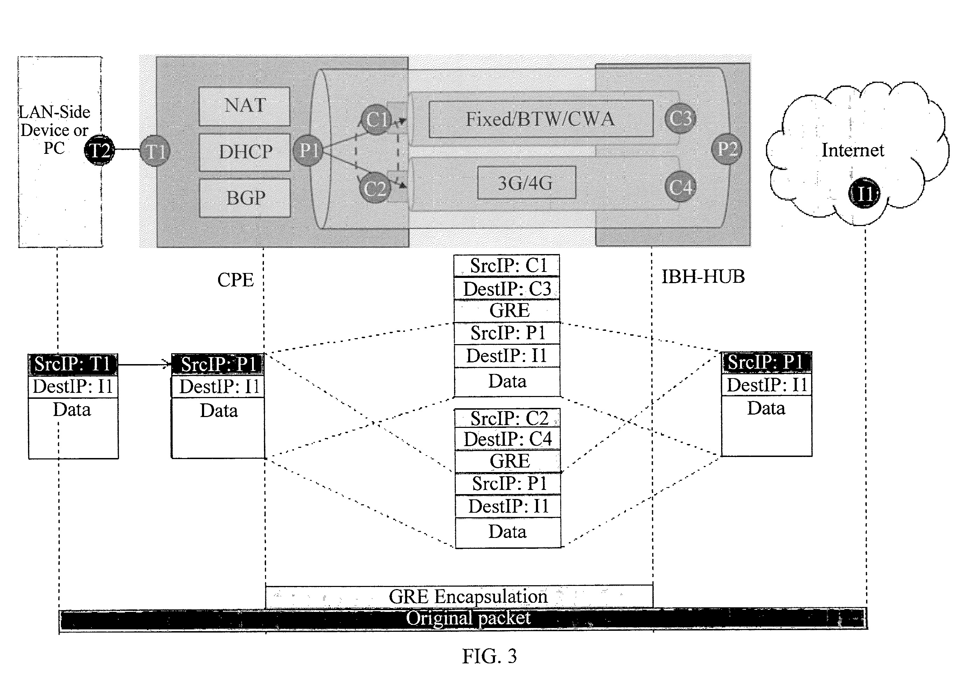

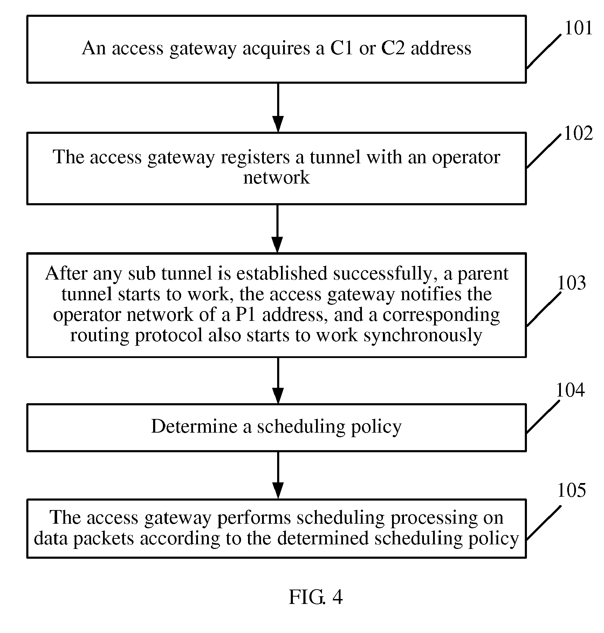

As shown in FIG. 3 and FIG. 4, reference numerals in the figures are described as follows:
T2: IP address (which is generally 192.168.x.x) allocated to a client device on an LAN (Local Area Network, local area network) side by using a DHCP (Dynamic Host Configuration Protocol, Dynamic Host Configuration Protocol) function of an access gateway;
T1: default gateway of a network on the LAN side;
P1: public IP address;
C1: address acquired from a fixed network by the access gateway, which generally uses the PPPOE (Point to Point Protocol over Ethernet, Point to Point Protocol over Ethernet), the PPPOA (Point to Point Protocol over ATM, Point to Point Protocol over ATM), or the IPOE (Internet Protocol over Ethernet, Internet Protocol over Ethernet);
C2: address acquired from a mobile network by the access gateway;
C3: fixed network address of an operator network, for example, a POP (point-of-presence, point of presence) or a HUB (hub);
C4: mobile network address of the operator network, where the address may be the same as the C3 address;
P2: public IP address that is on the side of the operator network and corresponding to P1; and
I1: Internet address.

A data transmission method provided by this embodiment of the present invention includes the following steps:
Step 101: An access gateway acquires a C1 or C2 address.
Step 102: The access gateway registers a tunnel with an operator network. The tunnel may be encapsulated by using the GRE (General Routing Encapsulation, General Routing Encapsulation), the UDP (User Datagram Protocol, User Datagram Protocol), the IP or a tunnel in any other form. Optionally, if the tunnel needs to be authenticated, the operator network sends an authentication request to the access gateway, where the authentication request carries a verification code. The access gateway receives the authentication request of the tunnel, encrypts the verification code according to a local account, and sends encrypted information and a user name back to the operator network. The operator network authenticates a user according to authentication information, and if the authentication succeeds, sends an authentication success message to the access gateway, so that a sub tunnel is created successfully, or if the authentication fails, sends authentication failure to the access gateway, and terminates the procedure. The sub tunnel is a tunnel established on a physical link, and is a DSL channel or an LTE channel responsible for actual data encapsulation and transmission.
Step 103: After any sub tunnel is established successfully, a parent tunnel starts to work, the access gateway notifies the operator network of a P1 address, and a corresponding routing protocol also starts to work synchronously. The parent tunnel refers to a logic tunnel from the access gateway to the operator network, and represents an end-to-end connection between the two.
Step 104: Determine a scheduling policy.

Manner 1: The access gateway determines corresponding uplink and downlink scheduling policies, and notifies the operator network of the scheduling policies, or
Manner 2: The access gateway and the operator network negotiate to determine corresponding uplink and downlink scheduling policies.

The scheduling policy may be determined by the access gateway according to a user requirement and a specific status of a network, for example, when a bandwidth requirement for data transmission is greater than a maximum bandwidth that the DSL channel can provide, exceeding data packets are immediately switched to the LTE channel for transmission, that is, when the bandwidth requirement for data transmission exceeds 90% of the maximum bandwidth that the DSL channel can provide, and the status lasts for at least 2 seconds, the exceeding data packets are immediately switched to the LTE channel for transmission.

Step 105: The access gateway performs scheduling processing on data packets according to the determined scheduling policy.

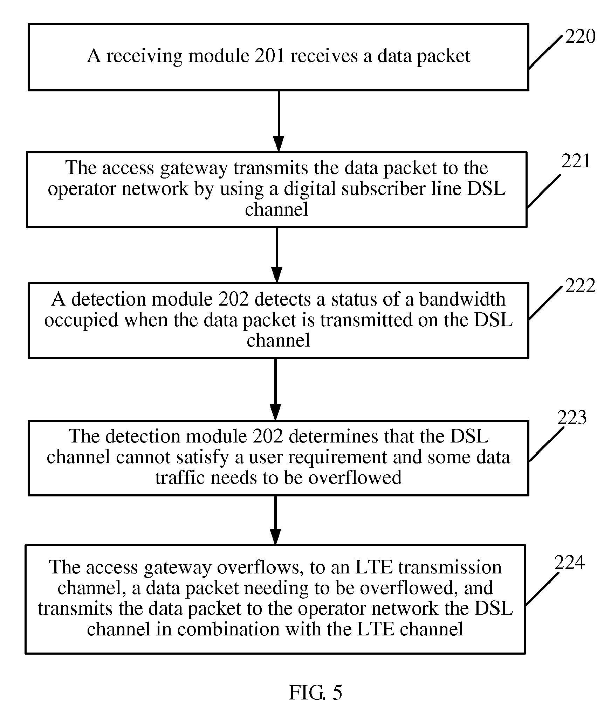

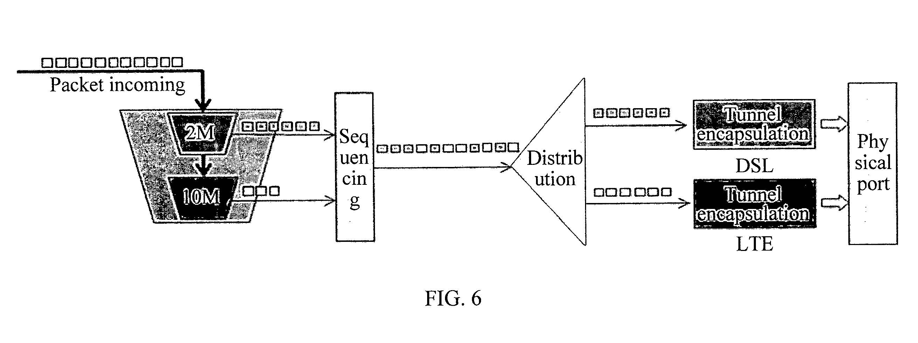

As shown in FIG. 5, a manner in which the access gateway performs scheduling processing on the data packets are specifically as follows:
Step 220: A receiving module 201 receives the data packets.
Step 221: The access gateway transmits the data packets to the operator network by using a digital subscriber line DSL channel.
Step 222: A detection module 202 detects a status of a bandwidth occupied when the data packets are transmitted on the DSL channel.
Step 223: The detection module 202 determines that the DSL channel cannot satisfy a user requirement and some data packets need to be overflowed. As shown in FIG. 6, a determining manner is specifically that: data packets are measured by using a measurement bucket of the DSL channel, and if the data packets do not exceed a capacity of 2 M of the measurement bucket of the DSL channel, the data packets are transmitted by using the DSL channel without the need of being overflowed; or if the data packets exceed a capacity of the measurement bucket of the DSL channel, the excess data packets need to be overflowed to a measurement bucket of 10 M of the LTE channel, and the overflowed data packets are transmitted by using the LTE channel.
Step 224: The access gateway overflows, to an LTE channel, data packets needing to be overflowed, and transmits the data packets to the operator network by using the DSL channel in combination with the LTE channel, which specifically is that: an allocation module 203 allocates, to an LTE transceiver module 206, some data packets needing to be overflowed, the LTE transceiver module 206 transmits the overflowed data packets to an operator network 140 by using the LTE channel, and a DSL transceiver module 204 transmits, to the operator network 140 by using the DSL channel, data packets that are not overflowed.

Certainly, after Step 224, Step 225 may further be included: the detection module 202 regularly detects the status of the bandwidth occupied when the data packets are transmitted on the DSL channel, and if it is determined that the DSL channel can satisfy the user requirement independently, the access gateway no longer performs no data packets overflow processing.

Optionally, before Step 224, the detection module 202 further determines availability of the LTE channel, and if the LTE channel is available, performs a next step, so as to ensure that after the data packets are overflowed to the LTE channel, the LTE channel can transmit the overflowed data packets smoothly.

In addition, because of different network latency, when data packets are transmitted on different links, out-of-order occurs, so that a sequence number needs to be allocated to each packets before the sending. A receive end may sort the packets again by using the sequence numbers, so as to achieve an objective of preventing out-of-order of the packets.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not provided herein again.

In the several embodiments provided by this application, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data transmission method, wherein the method comprises:
receiving, by an access gateway, data packets;
transmitting, by the access gateway, the data packets to an operator network by using a digital subscriber line, DSL, channel;
detecting, by the access gateway, a status of a bandwidth occupied when the data packets are transmitted on the DSL channel;
determining, by the access gateway, that the DSL channel cannot satisfy a user requirement and some data packets need to be overflowed; and
overflowing, by the access gateway to an LTE channel, data packets needing to be overflowed, and transmitting the data packets to the operator network by using the DSL channel in combination with the LTE channel.

2. The method according to claim 1, wherein a determining manner in the step of the determining, by the access gateway, that the DSL channel cannot satisfy a user requirement and some data packets need to be overflowed is specifically: measuring the data packets by using a measurement bucket of the DSL channel, and if the data packets do not exceed a capacity of the measurement bucket of the DSL channel, transmitting the data packets by using the DSL channel without the need of overflow; or if the data packets exceed a capacity of the measurement bucket of the DSL channel, needing to overflow the excess data packets.

3. The method according to claim 2, wherein a specific manner of the overflowing, by the access gateway to an LTE channel, the data packets needing to be overflowed is: allocating, by an allocation module of the access gateway to an LTE transceiver module of the access gateway, some data packets needing to be overflowed, transmitting, by the LTE transceiver module, the overflowed data packets to the operator network by using the LTE channel, and transmitting, by a DSL transceiver module of the access gateway to the operator network by using the DSL channel, data packets that are not overflowed.

4. The method according to claim 1, before the step of the overflowing, by the access gateway to an LTE channel, the data packets needing to be overflowed, further comprising:
further determining, by the access gateway, availability of the LTE channel, and if the LTE channel is available, performing a next step.

5. The method according to claim 1, after the step of the transmitting the data packets to the operator network by using the DSL channel in combination with the LTE channel, further comprising: regularly detecting, by the access gateway, the status of the bandwidth occupied when the data packets are transmitted on the DSL channel, and if it is determined that the DSL channel can satisfy the user requirement independently, performing, by the access gateway, no data packets overflow processing.

6. An access gateway, comprising:
a receiving module, configured to receive data packets;
a detection module, configured to detect a status of a bandwidth occupied when the data packets are transmitted on a DSL channel and further determine whether the DSL channel satisfies a user requirement;
an allocation module, configured to perform overflow allocation on data packets; and
a DSL transceiver module and an LTE transceiver module, wherein when the detection module determines that the existing DSL channel cannot satisfy the user requirement and some data packets need to be overflowed, the allocation module allocates, to the LTE transceiver module, some data packets needing to be overflowed, and the LTE transceiver module transmits the overflowed data packets to an operator network by using an LTE channel.

7. The apparatus according to claim 6, wherein a method of determining whether the DSL channel satisfies a user requirement is specifically:
measuring the data packets by using a measurement bucket of the DSL channel, and if the data packets do not exceed a capacity of the measurement bucket of the DSL channel, transmitting the data packets by using the DSL channel without the need of overflow; or if the data packets exceeds a capacity of the measurement bucket of the DSL channel, needing to overflow the excess data packet.

8. The apparatus according to claim 6, wherein the detection module is further configured to: regularly detect the status of the bandwidth occupied when the data packets are transmitted on the DSL channel, and if it is determined that the DSL channel can satisfy the user requirement independently, the access gateway no longer performs data packets overflow processing.

9. A data transmission system, comprising:
an operator network;
one or more client devices, connected to the operator network by using an access gateway; and
the access gateway, specifically comprising: a receiving module, configured to receive data packets; a detection module, configured to detect a status of a bandwidth occupied when the data packets are transmitted on a DSL channel and further determine whether the DSL channel satisfies a user requirement; an allocation module, configured to perform overflow allocation on data packets; and a DSL transceiver module and an LTE transceiver module, wherein when the detection module determines that the existing DSL channel cannot satisfy the user requirement and some data packets need to be overflowed, the allocation module allocates, to the LTE transceiver module, some data packets needing to be overflowed, and the LTE transceiver module transmits the overflowed data packets to the operator network by using an LTE channel.

10. The system according to claim 9, wherein a method of determining whether the DSL channel satisfies a user requirement is specifically:
measuring the data packets by using a measurement bucket of the DSL channel, and if the data packets do not exceed a capacity of the measurement bucket of the DSL channel, transmitting the data packets by using the DSL channel without the need of overflow; or if the data packets exceeds a capacity of the measurement bucket of the DSL channel, needing to overflow the excess data packets.

11. The system according to claim 9, wherein the detection module is further configured to: regularly detect the status of the bandwidth occupied when the data packets are transmitted on the DSL channel, and if it is determined that the DSL channel can satisfy the user requirement independently, the access gateway no longer performs data packets overflow processing.
